# EUROPEAN PATENT APPLICATION

(11) **EP 0 629 432 A1**
(43) Date of publication of application: **21.12.1994**
(21) Application number: 94250148.7
(22) Date of filing: 09.06.1994
(51) Int. Cl.: B01D 53/36, B01D 53/04, F23G 7/06

(54) **Heat transfer packing material with catalyst and/or adsorbent used for regenerative incineration**

(30) Priority: 15.06.1993 US 77840
(71) Applicant: W.R. GRACE & CO.-CONN., New York New York 10036-7794 (US)
(72) Inventor: Pereira, Carmo Joseph, Silver Spring, MD 20906 (US); Plumlee, Karl W., Ellicott City, MD 21042 (US)
(74) Representative: UEXKÜLL & STOLBERG

(57) **Abstract**

Improved regenerative packing materials are made by coating conventional heat transfer packing structures with a washcoat containing a catalyst or an adsorbent. When these regenerative packing materials are used for the destruction of volatile organic compounds (VOCs) in a regenerative system, they permit the use of lower average temperatures to oxidize the VOCs which improves operation and the life of the equipment. Catalysts include noble metals and base metals.

## Description

### BACKGROUND OF INVENTION

### 1. Field of the Invention

This invention relates to improved, catalyzed packings for regenerative systems and their method of use.

### 2. Description of Prior Art

Regenerative systems used for the oxidation of Volatile Organic Compounds (VOCs) contained in exhaust gases from industrial and chemical plants contain a combustion chamber, for heating the exhaust gases to temperatures that are sufficiently high enough to achieve thermal oxidation, and one or more columns packed with heat transfer material, that recover most of the sensible heat from the hot exhaust prior to venting.

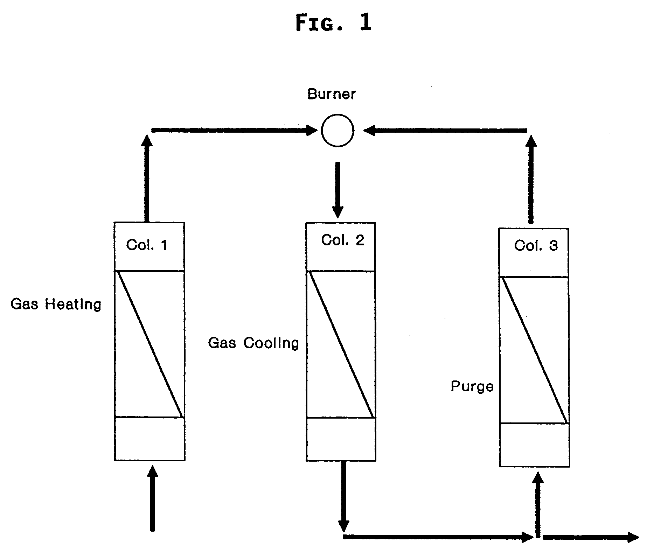

The operation of a regenerative system in its lined-out state (i.e., after initial start up) is illustrated in Figure 1. Process exhaust gases are preheated in column 1, that contains hot ceramic packing material which is cooled in the process. Hot gases pass through a combustion zone, that further heats exhaust to between 1,400 and 1,600° F. VOCs undergo thermal oxidation primarily in the combustion zone. Hot exhaust passes over column 2 which contains cooler ceramic materials which recover the sensible heat and are themselves heated in the process. Cooled gas, nominally in the 300 to 450°F temperature range, is then sent to the stack. A small fraction of the vent gas is used to purge column 3 of adsorbed VOCs and this purge stream is returned to the burner.

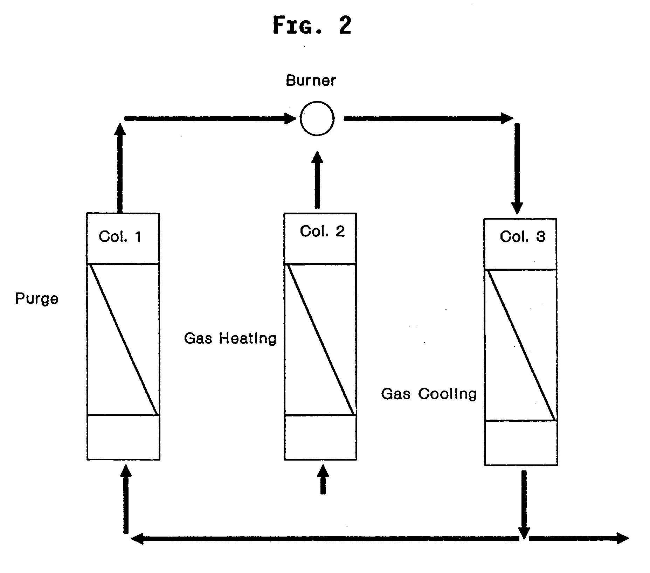

After a preallotted cycle time, which is determined by the configuration and design of the packed columns, the flow of exhaust gases is switched as is shown in Figure 2. Process exhaust is now preheated in column 2, which contains hot packing material, passed through the combustion zone, and used to preheat column 3, which contains cooler packing materials (purged during the prior cycle). Cooled exhaust is vented; a small fraction of vent gases is used to purge column 1 and returned to the combustion zone, and so on.

The design of the packed columns is key to the heat recovery efficiency of the overall system. To ensure heat recovery of up to 95%, the size of the packed columns is typically large. The trend in the art of regenerative system design is toward smaller-sized units, for cost reduction and ease of installation. For example, U.S. Patent No. 5,163,829 describes a compact regenerative incinerator which includes a single vessel with two compartments separated by a partition. Each compartment includes an opening and a combustion chamber, and these are separated by a thermal storage medium.

Heat transfer packing materials are conventionally made up of inorganic metals or metal oxides. See Perry's Chemical Engineers' Handbook, Sixth Edition, 1984, Chapter 18 in the section on Packed Columns. Fig. 18-34 illustrates typical dumped-type packings such as Raschig rings, Berl saddles, Intalox/metal, Intalox saddles (ceramic), Tellerette and Pall rings. The chemical composition of one such material, manufactured by the Knight Division of the Koch Engineering Company, Inc. and referred to as Flexisaddle™ packing is shown in Table 1.

**Table 1**

| Chemical Properties of Flexisaddle™ Packing | |
|---|---|
| | % |
| SiO₂ | 65.0 |
| Al₂O₃ | 27.4 |
| Fe₂O₃ | 1.7 |
| TiO₂ | 1.7 |
| CaO | 0.2 |
| MgO | 0.6 |
| Na₂O | 0.5 |
| K₂O | 2.7 |
| Loss on Ignition | 0.2 |

The physical properties of the packing are shown in Table 2. The water adsorption of these materials indicates that they are densely-fired, non porous ceramics.

**Table 2**

| Physical Properties of Flexisaddle™ Packing | |
|---|---|
| Specific Gravity | 2.40 |
| Density, lbs/ft.³ | 150 |
| Water Adsorption, % (ASTM C 373) | 0.1 - 0.3 |
| Acid-Resisting Property, % Wt. Loss (ASTM C279) | 4-5 |
| Packaging Ft.³/bag | 1.5 |

The packing materials are available in a number of different sizes. Smaller-sized packings have a higher heat transfer efficiency due to the higher geometric surface area per unit reactor volume, but a higher pressure drop as well. The optimal packing size and reactor dimensions are chosen to match the requirements of the auxiliary system components (such as blowers, fans, duct dimensions, etc.) Typical properties of the Flexisaddle™ packing are shown in Table 3.

**Table 3**

| Design Characteristics of Flexisaddle™ Packing | | | | |
|---|---|---|---|---|
| | 1" | 1.5" | 2" | 3" |
| No Pcs./Ft.³ | 1542 | 672 | 295 | 91 |
| Surface Area, Ft²/Ft.³ | 68.0 | 51.1 | 35.6 | 25.6 |
| Free Space, % | 70.8 | 72.1 | 75.2 | 76.0 |

The heat transfer performance of a regenerative packed column depends on the exhaust flow rate, its temperature, the column geometry and the properties of the packing materials. Key packing properties include bed void fraction and the size/shape of the packing material (e.g., cylinder, rings, saddles, etc.). These properties determine the average heat transfer coefficient and the pressure drop. Two other material properties that effect transient heat transfer performance are specific heat and thermal conductivity. Specific heat determines the heat capacity of the bed. Thermal conductivity determines the rate of heat up of individual particles. High specific heat and thermal conductivity are desirable properties for heat transfer packing materials.

Higher specific heat and thermal conductivity are obtained by decreasing the porosity of the material. This is typically achieved by calcination of the packing materials at temperatures that are high enough to sinter the material to near its theoretical density.

Destruction of VOCs in regenerative systems is primarily through thermal oxidation. The extent of oxidation depends on the type of compound, the temperature, the residence time, and the air flow distribution. Air flow distribution through the combustion zone and burner design are key to high conversion operation. As discussed earlier, the primary function of the packing material is for high heat recovery efficiency. The VOC oxidation contribution of the hot packing materials is believed to be relatively minor. The selection and control of valves used for switching exhaust flows from one bed to another can become important factor when high VOC conversion efficiencies of >95% are required. Valve synchronization and leaks can contribute to lower overall VOC destruction. Value durability can be a concern at the higher operating temperatures required for thermal oxidation.

The use of a catalyst layer in regenerative systems for the destruction of VOCs has been reported.

U.S. Patent 3,870,474, discusses the use of a three column regenerator similar to the schematic in Figures 1 and 2. The incinerator system provides means for purging the column of odorous or untreated air or gas and reintroducing purged air back into the system to remove contaminants prior to being discharged to the atmosphere. The purged air is mixed with the main exhaust air flow and discharged into the combustion chamber where the contaminants are oxidized. In column 6, line 3, the patent says that, if desired, a suitable combustion catalyst may be placed in the warmest part of the regenerator as a horizontal layer or may be made a part of the regenerator packing material as a horizontal layer. The patent does not, however, discuss the conversion of the regenerative material into a catalyst by washcoating of the packing with a catalytic overlayer.

European Patent 365,262 discusses a method and an apparatus for continuously purifying an oxygen-containing gas of its combustible contaminants by a thermal and/or catalytic combustion process during which at least part of the heat of combustion is recovered by a regenerative heat exchanger in two stationary, substantially identical zones comprising solid heat exchange material and separated by a combustion chamber. The exhaust air flows through both heat exchanger zones and the direction of flow through the zones is reversed periodically such that the two zones are alternately heated and cooled in periods of 1 to 30 minutes. The apparatus described in the patent calls for a substantially symmetrical reactor having a central combustion chamber (with a source of heat) and a valve-guided line for discharging exhaust to a stack. The two identical heat exchanger layers are placed on either side of the combustion chamber, optionally separated from the chamber by a catalyst layer. The patent also makes no mention of coating part or all of the regenerative packing material with either catalyst or adsorbent.

U. S. Patent 4,770,857 describes an apparatus for the catalytic reaction of gases comprising heating the cold reactive gas by passing it through a beaded regenerative material present in a first portion of a first stage and then passing the heated reactive gas through a solid catalyst. The gases can be passed over a number of beds containing catalyst and regenerative packing with exhaust flows directed to maximize heat transfer efficiency The catalysts are precipitated on supports in the form of extrudates, tablets, etc. Heat exchange packing materials are ceramics of silica and/or alumina in conventionally-used shapes. The patent states that the catalyst material itself can be used as heat exchange material; however, the use of catalyst-coated heat exchange material is not discussed. As will be discussed further in the description of the present invention, the advantage of using heat exchange material as a catalyst support is the significantly higher heat transfer properties of the bed that are obtained.

The following section is to set forth a different type of regenerative system used in removing nitrogen oxides from exhaust gases. These systems are directed to DeNOx technology which involves significantly different gas flow and gas compositions. For example, they are used with power plant boiler systems where very large flows of preheat air and exhaust gases are involved. The exhaust gases generally contain ash particles and there is a significant consideration in having the heat transfer material moving about so that any ash particles, which would coat and inactivate the heat transfer particles, can be removed. The exhaust gases also contain catalyst poisons (such as alkali and alkaline earth oxides, heavy metals, etc.) and thus make-up catalysts are continually being added in these moving systems. In the embodiments where particles are moving through the system, the particles are generally spherical to facilitate their movement. One would not genially use interlocking rings and saddles as are used in the static beds for VOC destruction.

U.S. Patent 4,940,567 describes an apparatus for reducing nitrogen oxides from exhaust gas in a two-part vertical heat exchanger which is traversed from top to bottom by a plurality of catalytically active, separately movable heat storage elements. In the first upper heat exchanger, exhaust gas is preheated by heat transferred from recycled heat storage elements. In the second portion of the heat exchanger, which is downstream from and below the first portion, nitrogen oxides are reduced in the presence of added ammonia and the heat storage elements that are catalytically active. The movable catalyst can be removed and replaced by fresh or regenerated catalyst to maintain a constant nitrogen oxide reduction efficiency. Since this is basically a patent on an apparatus, there is little discussion of the specific catalytic materials nor how they are applied to the heat transfer particles. Reference is made in column 1 to German Patent 3,335,917 for heat storage material with a catalyst coating. One U.S. equivalent patent is U.S. 4,602,673. However, as discussed below, that disclosure also fails to describe the specific nature of the catalyst. Because this is an apparatus for DeNOx treatment, the DeNOx catalyzed heat transfer packings are continuously moving from one portion of the apparatus to the other for the reasons discussed above. Such a system is significantly different from VOC washcoat catalyzed heat transfer packings of the present invention which remain stationary in a column during the process of use.

U. S. Patent 4,602,673 discusses a rotating air preheater wheel in which the stainless steel heat transfer elements at the hot end section of the air heater are coated with catalyst. It claims priority from German 3,335,917, which is discussed in U.S. 4,940,567. Hot exhaust gases flow over the hot catalyst and, in the presence of pre-injected ammonia, nitrogen oxides are reduced to nitrogen and water. Again, this relates to DeNOx technology. Heat transfer elements that are heated by hot exhaust rotate into the cold air side and preheat incoming air to the power plant. A distinguishing feature of this invention is that the air preheater baskets containing catalyst coated elements represent a monolithic structure that rotates continuously between the hot exhaust side and the cold air side. It does not relate to packed columns for VOC control.

U.S. Patent 5,145,652 discloses a similar rotating exhaust gas preheater wheel. The rotating regenerative heat exchanger has a first layer of heat storage mass followed by a second layer of heat-exchanging storage material on the surface of which are provided catalytically active compounds. Again a distinguishing feature of this invention is that catalyst coated elements represent a monolithic structure that rotates continuously between the hot exhaust side and the cold exhaust gas entry side.

These patents on DeNOx control systems with moving heat transfer materials and scant disclosure on the catalytic compositions and formulations provide no suggestion on making improved stationary regenerative packing materials for VOC control.

### 3. Objects of the Invention

It is an object of this invention to make improved regenerative packing materials for use in destroying volatile organic compounds.

It is further object of this invention to provide regenerative packing materials with a washcoat containing a catalyst or an adsorbent for use in destroying volatile organic compounds.

It is further object of this invention to provide a method for coating the external surfaces of regenerative packing materials with a washcoat containing a catalyst or an adsorbent for use in destroying volatile organic compounds.

It is further object of this invention to optimally locate these coated elements either together or separately throughout the regenerative column.

It is further object of this invention to incorporate several different catalyst formulations in the regenerative column.

It is further object of this invention to incorporate several different adsorbent formulations in the regenerative column.

It is further object of this invention to optimally place each of the catalyst and adsorbent formulations to maximize VOC conversion and heat recovery in the beds and to minimize VOC leakage across valves.

These and further objects will become apparent as the description of the invention proceeds.

### Summary of the Invention

Improved regenerative packing materials are made by coating the external surfaces of regenerative heat transfer packing structures with a washcoat containing a catalyst or an adsorbent. The coated materials will be installed in the stationary columns of a regenerative system in a manner that provides both pollutant reduction and operational advantages.

### Brief Description of the Drawings

Fig. 1 illustrates the operation of a regenerative system in its lined out state after initial start up.

Fig. 2 illustrates a method for switching gas flow after a period of operation.

### Description of the Preferred Embodiments

Sensitivity of VOC destruction efficiency on combustor design can be reduced by incorporation of a catalyst as part of the regenerative packing columns for two reasons: (a) lower average temperatures are now required to oxidize the VOCs; peak temperature and the residence time at that temperature are now of lesser importance in determining destruction efficiency, and (b) lower temperature operation improves operation and life of valving equipment. Both of these factors contribute to lower material and operating costs, thereby improving process economics. As a result, a number of patents have discussed the introduction of a catalyst layer in a regenerative system.

The performance of a catalyst layer depends on the exhaust composition and flow rate, the temperature, the reactor geometry and catalyst properties. As with heat transfer packings, key properties include bed void fraction and the shape/size of catalyst particles. These properties determine the external mass transfer coefficient and the pressure drop. The external mass transfer coefficient determines the upper limit of conversion performance. Again, smaller catalyst particles have a higher mass transfer-limited performance (typically reached at higher temperatures), but also a higher pressure drop. Other important catalytic properties are the type of catalyst, the catalytic metals loading and the pore structure of the catalyst.

Several noble and base metal catalysts are known to effectively oxidize VOCs. At higher temperatures (typical of those practiced in VOC oxidation catalyst service), the reaction rate over catalytic sites (that are dispersed on a high surface area porous particle) is much highs than the rate at which VOCs diffuse into the porous catalyst; consequently, oxidation reactions occur in a narrow zone around the exterior surfaces of the particles. Both this reason and product economics drive the placement of the catalyst in a narrow shell (of less than 100 microns) around the exterior surfaces of the particles. Metals impregnation technology for placing catalyst in a layer at the exterior surfaces of pellets has been developed for automobile exhaust catalysts and are well known to those practiced in the art.

Catalyst particles have high internal surface area and high porosity. As a result of their high porosity, they have low heat capacity and low thermal conductivity and so are not suitable for use as heat transfer packings. Heat transfer packings, on the other hand, have low porosity and low internal surface area and are not suitable as catalysts. A comparison of pore and thermal properties is shown in Table 4.

**Table 4**

| Typical properties of heat transfer packing and catalyst | | |
|---|---|---|
| | Heat Transfer Packing | Catalyst |
| Pore Properties: | | |
| Porosity, cc/cc | 0.001 - 0.003 | 0.4 - 0.8 |
| BET Surface Area, m²/g | 0 - 2 | 50 - 300 |

| Thermal Properties (@ 500°K) | | |
|---|---|---|
| Specific Heat Per Volume cal/cc°K | 0.6 - 0.9 | 0.17 - 0.5 |
| Thermal Conductivity, w/cm°K | 0.2 - 0.4 | 0.007 - 0.065 |

The widely different properties of heat transfer packings and catalysts can be combined by placement of a thin catalytic washcoat on a ceramic heat transfer packing. The washcoat will impart the porosity and BET surface area required for dispersing catalytic sites. Further, the volume of the washcoat in comparison to the volume of the heat transfer packing will be small. For example, the washcoat accounts for only 2.3% of the volume of a 1/2" diameter ceramic sphere coated with a 50 micron catalyst layer. The washcoat will, therefore, have a negligible effect on the thermal properties of the ceramic packing. Thus, such a material will have desirable catalytic and thermal properties.

The art of washcoating is well known to those practiced in the art of making monolithic automobile and stationary-source catalysts. In such catalysts, a layer of catalytic materials may be coated on the walls of channels in inert monoliths. One example of an inert monolithic structure is the cordierite monolith manufactured by the Corning Corp. Washcoating technology has improved over the years. The pore structure of the washcoat has been optimized to obtain high catalytic performance over the service life of the catalyst. For example, U.S. Patent 4,771,029 teaches how washcoat thickness ,and pore structure can be optimized to maximize performance in the presence of a poisoning agent such as phosphorous.

Technology for washcoating irregular particulate structures, such as heat transfer packings, has not been developed and practiced in "stationary", fixed beds or columns. It is the purpose of the present invention to coat structures with catalyst or adsorbent and to use them as heat transfer material. Such composite materials, as discussed above, will have the thermal properties required for efficient heat transfer. In fact, the materials may have a heat transfer efficiency that is superior to conventional packing materials for the following reason. For conventional packings, the heat transfer rate is the product of the heat transfer coefficient, the external surface area to volume, and the temperature difference between the gas and the solid. This is also true for catalyzed packings; however, while the gas temperature is expected to be lower for catalyzed beds, the exothermic heat of VOC oxidation liberated in the catalyst washcoat layer will be efficiently utilized "in situ" to heat the inert ceramic inside.

Advantages can also be derived by coating the ceramic heat transfer packings with adsorbent materials that are well known in the art. The function of such materials can be for heat transfer and to adsorb VOCs and/or to trap potential catalyst poisons. Benefits of using such materials will include extended catalyst life and lower emissions of VOCs and catalytic poisons into the atmosphere.

Coated heat transfer packing materials comprise from an effective amount up to 100% of the total packing elements in each column.

Washcoat may contain a variety of catalyst ingredients that are supported on high surface area inorganic oxides. Catalyst ingredients include, but are not limited to, noble metals (such as Pt, Pd, Rh, Ir, Re, etc.) and base metal oxides (such as MnO₂, Cr₂O₃, CeO₂, CuO, V₂O₅, WO₃ etc.). High surface area supports include alumina, titania, clay, zeolites, carbons and the like.

Washcoat may contain adsorbent materials that are held on the external surfaces using binders well known to those skilled in the art. Adsorbents include activated carbon, zeolites (metal-cation exchanged, and otherwise), clays, silica, alumina and combinations thereof. Binder materials include alumina, silica, clays and sols containing these compounds.

Heat transfer media of the invention are placed in the column at temperatures of between 400°F to 1,600°F with preferred temperature locations for the catalyst at 500 to 1,200°F and for the adsorbent of 400 to 1,600°F.

A preferred configuration of a column having several different catalyst formulations would be the use of a catalyst having high thermal stability dispersed on a high surface area modified inorganic oxide support (such as Pd/rare earth-stabilized gamma alumina) in the higher temperature portions of the column, followed by a catalyst-support combination having medium thermal stability (such as Pt and/or Pd or gamma alumina), and then followed by a base metal oxide catalyst having superior low temperature oxidation activity on a high surface area support (such as Cr₂O₃/ gamma alumina or zeolite) at the lower temperature end of the bed, and so on. The volume of each formulation would be optimized to meet the needs of the application with the formulations displayed as layers or mixed together.

A preferred configuration of a column having several different adsorbent formulations comprising hydrophobic (such as dealuminated zeolite Y, high Si/Al ZSM-5, silicalite, etc.) and hydrophilic (mixed metal oxides, clays, morderite, Na-Y, etc.) adsorbents wherein the volume and location of the adsorbent formulations are optimized to minimize leakage of desorbed hydrocarbons across valves. Adsorbents could be mixed together in the coating or coated separately. Higher capacity adsorbent materials could be placed in the colder sections of the column.

In addition to separate packed columns with different types of just catalyst formulations or different types of just adsorbent formulations, it is also envisioned to use a combination of catalyst and adsorbent formulations which can be optimized to maximize VOC reduction. In one embodiment, a high surface area hydrothermally stable modified zeolite, or, metal or metal oxide-promoted support is placed at the high temperature end to function as a trap for catalyst poisons, followed by a high thermal stability catalyst, followed by a medium thermal stability catalyst, followed by a low temperature catalyst, followed by a hydrophobic zeolite-containing adsorbent at the low temperature end, and so on. Catalysts and adsorbents can be placed either separately as layers or mixed together.

Advantages of using the coated packing of the present invention include, but are not limited to, the following:
(a) Lower operating temperature and increased flexibility of combustor operation at high VOC destruction efficiencies. Potential operator benefits include lower capital cost for the combustion chamber and valving, lower fuel cost (with the possibility of autothermal operation, depending on VOC concentration) and reduced generation of thermal NOx in the burner.
(b) Reduced size of regenerative columns (or conversely, increased exhaust throughout for a given column size). Exothermic heat of reaction generated in the coating is more efficiently used for heating the underlying packings thereby reducing column size.
(c) Increased destruction of exhaust VOCs as a result of catalytic oxidation in the heat-up and cool-down zones and across the burner.
(d) Longer cycle times. This should result in lower maintenance costs and reduced number of pressure spikes during continuous operation.
(e) Reduced emissions of VOCs and potential catalyst poisons that are adsorbed in the optimally-located adsorbent-coated packings. Presence of these materials will also extend the life of the catalyst.

Having described the basic aspects of our invention, the following examples are given to illustrate specific embodiments thereof.

### Example 1

### Preparation of Washcoated Packing Material

Catapal alumina, having an as-received solids content of 92.5% at 800°C, was blended together with Disperal alumina, having an as received solids content of 77.5% at 800°C, in a weight ratio of 93:7. Nitric acid (as received - 70% HNO₃) was added to the level of 6.3% based on alumina followed by addition of deionized water to obtain a solids content of 30%. The slurry was ball milled for 2 hours.

One inch size Flexisaddle™ packings were immersed into the slurry and thereby coated with an alumina washcoat at a loading of 30 mg/in². The coated packing were air dried and then calcined at 500°C for 5 minutes.

### Example 2

### Preparation of Catalyzed Packing Material

The alumina-containing slurry was prepared as described in Example 1. Prior to ball milling, however, palladium nitrate and platinum amine solutions were added in a Pd:Pt ratio of 1:3 to yield a total noble metal loading of 1.3 wt.% noble metal on a washcoat basis.

One inch size Flexisaddle ™ packings were immersed into the slurry and coated to a target washcoat loading of 30 mg/in². For the composition, described above, the total loading on a ft³ of packing basis was 4 g noble metal/ft³. Following the procedure in Example 1, the catalyzed packings were air dried and calcined at 500°F for 5 minutes.

### Example 3

### Oxidation Performance

A column having a bed length of 4 ft and filled with 1" Flexisaddle ™ regenerative packing with catalyzed external surfaces will have a geometric surface area of about 68 ft²/ft³ and a free volume of about 70.8%. Applying a mass transfer-limited performance using correlations for packed beds such as in J. M. Smith, Chemical Engineering Kinetics, 1970, and a superficial velocity of 3.1 ft/sec the calculated results to be obtained are set forth in Table 5.

**Table 5**

| VOC Type | Temp °F | kₘ¹ cm/s | % Conversion for 4 ft Bed | LEL² V% | ΔT °F |
|---|---|---|---|---|---|
| Hexane | 500 | 3.88 | 99.67 | 1.18 | 272 |
| | 750 | 5.28 | 99.79 | | 265 |
| | 1,000 | 6.77 | 99.86 | | 259 |
| Benzene | 500 | 4.25 | 99.81 | 1.4 | 264 |
| | 750 | 5.79 | 99.89 | | 257 |
| | 1,000 | 7.42 | 99.93 | | 251 |
| Ethanol | 500 | 5.17 | 99.95 | 3.28 | 264 |
| | 750 | 7.03 | 99.97 | | 257 |
| | 1,000 | 9.00 | 99.98 | | 251 |
| Propanol | 500 | 4.76 | 99.91 | 2.15 | 252 |
| | 750 | 6.52 | 99.95 | | 246 |
| | 1,000 | 8.38 | 99.97 | | 240 |
| Acetone | 500 | 4.76 | 99.91 | 2.55 | 256 |
| | 750 | 6.51 | 99.95 | | 249 |
| | 1,000 | 8.37 | 99.97 | | 243 |

| | | | | | |
|---|---|---|---|---|---|
| ¹Mass-transfer coefficient at conditions | | | | | |
| ²LEL at 1 atm and room temperature | | | | | |

The data in Table 5 demonstrate that over 99% removal of the VOC is possible under steady state mass transfer-limited conditions for a 4 foot long bed of catalyzed regenerative packing material.

It is understood that the foregoing detailed description is given merely by way of illustration and that many variations may be made therein without departing from the spirit of this invention.

## Claims

1. Regenerative packing material comprising heat transfer packing structures coated with layer of a washcoat containing a catalyst or an adsorbent.

2. A regenerative packing material according to Claim 1, wherein the catalyst comprises a noble metal or a base metal oxide.

3. A regenerative packing material according to Claim 2, wherein the noble metal is Pt, Pd, Rh, Ir, Re or mixtures thereof.

4. A regenerative packing material according to Claim 2, wherein the base metal is MnO₂, Cr₂O₃, CeO₂, CuO, V₂O₅, WO₃, MoO₃ or mixtures thereof.

5. A regenerative packing material according to Claim 1, wherein the adsorbent is selected from the group consisting of carbon, zeolites, metal-cation exchanged zeolites, clays, silica, alumina and mixtures thereof.

6. A regenerative packing material according to Claim 1, wherein the washcoat is a high surface material selected from the group consisting of alumina, titania, clay, zeolites, carbons and mixtures thereof.

7. A regenerative packing material according to Claim 1, wherein the heat transfer packing structure comprises inorganic metals or metal oxides.

8. A regenerative packing material according to Claim 1, wherein the heat transfer packing structures are cylinders, rings or saddles.

9. A regenerative packing material according to Claim 1, wherein the coating is palladium on alumina.

10. A regenerative packing material according to Claim 9, wherein the coating further contains platinum.

11. A regenerative packing material according to Claim 1, wherein the coating is Cr₂O₃ on alumina.

12. A method for making an improved regenerative packing material comprising coating heat transfer packing structures with a washcoat containing a catalyst or an adsorbent.

13. A method according to Claim 10, wherein the catalyst comprises a noble metal or a base metal oxide.

14. A method according to Claim 12, wherein the adsorbent is selected from the group consisting of activated carbon, zeolites, metal-cation exchanged zeolites, clays, silica, alumina and mixtures thereof.

15. A method according to Claim 12, wherein the washcoat is a high surface inorganic oxide selected from the group consisting of alumina, titania, clay, zeolites, activated carbons and mixtures thereof.

16. A method according to Claim 12, wherein the heat transfer packing structure comprises inorganic metals or metal oxides.

17. A method according to Claim 12, wherein the heat transfer packing structures are cylinders, rings or saddles.

18. In a method for oxidizing volatile organic compounds and recovering heat with a regenerative system, the improvement comprising using as the regenerative packing material the regenerative packing material of Claim 1.

19. In a method for oxidizing volatile organic compounds and recovering heat with a regenerative system, the improvement comprising using as the regenerative packing material the regenerative packing material of Claim 2.

20. In a method for oxidizing volatile organic compounds and recovering heat with a regenerative system, the improvement comprising using as the regenerative packing material the regenerative packing material of Claim 3.

21. In a method for oxidizing volatile organic compounds and recovering heat with a regenerative system, the improvement comprising using as the regenerative packing material the regenerative packing material of Claim 4.

22. In a method for oxidizing volatile organic compounds and recovering heat with a regenerative system, the improvement comprising using as the regenerative packing material the regenerative packing material of Claim 5.

23. In a packed regenerative column for oxidizing volatile compounds, the improvement comprising using as the regenerative packing material the regenerative packing material of Claim 1.

24. In a packed regenerative column for oxidizing volatile compounds, the improvement comprising using as the regenerative packing material the regenerative packing material of Claim 2.

25. A packed regenerative column according to Claim 23, wherein the column has several different catalyst formulations incorporated in the column.

26. In a packed regenerative column for oxidizing volatile compounds, the improvement comprising using as the regenerative packing material the regenerative packing material of Claim 5.

27. A packed degenerative column according to Claim 26, wherein the column has several different adsorbent formulations incorporated in the column.

28. A packed regenerative column according to Claim 25, wherein the column also has several different adsorbent formulations incorporated into the column.
